# EUROPÄISCHE PATENTANMELDUNG

(11) **EP 0 881 779 A2**
(43) Veröffentlichungstag der Anmeldung: **02.12.1998**
(21) Anmeldenummer: 98109281.0
(22) Anmeldetag: 22.05.1998
(51) Int. Cl.: H04B 1/16, H04B 1/10

(54) **Verfahren zur Erkennung von Multipathstörungen beim FM-Rundfunkempfang und Schaltungsanordnung zur Durchführung des Verfahrens**

(30) Priorität: 28.05.1997 DE 19722385
(71) Anmelder: GRUNDIG Aktiengesellschaft, 90762 Fürth (DE)
(72) Erfinder: Bienefeld, Axel, 90762 Fürth (DE); Steger, Konrad, 90762 Fürth (DE)

(57) **Zusammenfassung**

Die Erfindung betrifft ein Verfahren und eine Schaltungsanordnung zur Erkennung und Reduzierung von Multipathstörungen in einem Rundfunksignal. Bei diesem Verfahren wird ein Eingangssignal, welches mit Multipathstörungen behaftet ist, hochpassgefiltert. Anschließend wird das gefilterte Eingangssignal verstärkte Das gefilterte und verstärkte Eingangssignal wird auf typischerweise vorhandene Impulse, welche typischerweise bei Multipathstörungen auftreten, durchsucht und diese Impulse werden, wenn sie einen vorher festgelegten Signalpegel aufweisen, erfaßt und verbreitert. Das hierdurch entstehnde Signal wird über jeweils mindestens ein Zeitkonstantenglied geführt. Das entstehende Signal wird zur Ansteuerung von verschiedenen Funktionen verwendet.

## Beschreibung

Die Erfindung betrifft ein Verfahren zur Erkennung und Reduzierung von Multipathstörungen beim Empfang von frequenzmodulierten Rundfunksendungen mit einem mobilen Rundfunkempfänger sowie eine Schaltungsanordnung zur Durchführung des Verfahrens.

Multipathstörungen, auch Mehrwegeempfangsstörungen genannt, treten insbesondere bei in Kraftfahrzeugen betriebenen UKW-Rundfunkempfängern auf, da sich die Empfangsverhältnisse durch die Bewegung des Kraftfahrzeuges fortlaufend ändern. Diese Störungen treten unter anderem als Einbrüche im Feldstärkesignal auf. Diese Störungen sind, von den Auswirkungen im Audiokanal, in unterschiedliche Kategorien einzuteilen. Die Hauptkategorien sind hochfrequente zischelnde Störungen und niederfrequente Stereo-Interferenzgeräusche, wobei während eines Multipathereignisses meist beide Störungen mit variabler Gewichtung auftreten.

Bei Multipathstörungen kommt es bei einigen Stereodekodern, selbst bei sehr hoher Feldstärke, zu einem sogenannten Stereowobbeln (abruptes Umschalten zwischen Stereo und Mono).

Um Multipathstörungen zu reduzieren, ist es beispielsweise bekannt permanent die Höhen des Audiosignals abzusenken. Auf diese Weise wird bei Mono-Signalen ein beachtlicher Erfolg erzielt.

Eine weitere Verbesserung, vor allem bei Stereo-Signalen, läßt sich durch eine Mono-Überblendung während des Multipathereignisses erzielen.

Aus DE 37 21 918 ist ein Verfahren bekannt, welches Mehrwege-, Nebenkanal- und Gleichkanalstörungen erkennt. Hierbei wird ein Feldstärkeanzeigesignal in unterschiedlichen Frequenzbereichen in denen die unterschiedlichen Störungsarten auftreten, unterschiedlich verstärkt, für alle Störungsarten summiert und über der Zeit integriert. Das hierdurch entstehende Signal wird anschließend von dem Feldstärkeanzeigesignal in der Stereo-Überblendschaltung subtrahiert.
Nachteilig ist hierbei, daß ein Feldstärkeanzeigesignal benötigt wird. Außerdem ist eine Erkennung von Störungen in der Feldstärke nicht möglich, da vor dem Integrierer eine Summierung durchgeführt wird.

Aus DE 3925629 ist ein Verfahren zum Erkennen von Mehrwegeempfangsstörungen beim Empfang von frequenzmodulierten Rundfunksendungen mit einem mobilen Rundfunkempfänger bekannt. Es wird einer Vergleichsschaltung der Pegel des Spektrums des heruntergemischten HF-Signals oberhalb der höchsten Modulationsfrequenz zugeführt. Das Stereo-Multiplex-Signal wird als HF-Signal benutzt, der Pegel des Spektrums des heruntergemischten HF-Signals oberhalb der höchsten Modulationsfrequenz ausgewertet und in einer Vergleichsschaltung mit dem Pegel der Nutzmodulation verglichen. Eine Mehrwegeempfangsstörung wird erkannt, wenn der Quotient der beiden Signalpegel eine vorgeschriebene Schwelle überschreitet.

Aufgabe der Erfindung ist es ein einfaches und effizientes Verfahren zur Erkennung von Multipathstörungen in einem mobilen Rundfunkempfänger, sowie eine Schaltungsanordnung zur Durchführung dieses Verfahrens anzugeben.

Diese Aufgabe wird mit den Merkmalen des Anspruches 1, sowie den Merkmalen des Anspruches 4 gelöst. Vorteilhafte Ausgestaltungen und Weiterbildungen der Erfindung ergeben sich aus den abhängigen Ansprüchen.

Der Vorteil der Erfindung ist, daß ein sehr schnelles Ansprechen auf die Multipathstörung gewährleistet und die Empfindlichkeit des Ansprechens frei einstellbar ist.
Vorteilhaft bei der Schaltungsanordnung gemäß Anspruch 4 ist, daß sich mit der Schaltungsanordnung verschiedene Signale im mobilen Rundfunkempfänger beeinflussen lassen.

Die Merkmale der Erfindung werden im folgenden an einem exemplarischen Ausführungsbeispiel anhand der Zeichnungen erläutert. Das Ausführungsbeispiel ist keine erschöpfende Aufzählung der erfindungsgemäßen Ausgestaltungsmöglichkeiten, sondern hat nur beispielhaften Charakter. Die Merkmale der Ansprüche können einzeln oder in beliebiger Kombination miteinander benutzt werden.

Es zeigt:
- FIG. ein Blockschaltbild eines Ausführungsbeispiels der Schaltungsanordnung.

Zur Erkennung von Multipathstörungen ist die Feldstärke, insbesondere deren Wechselspannungsanteile, oder das Multiplexsignal besonders geeignet.

Auf der Feldstärke und dem Multiplexsignal entstehen bei Multipathstörungen breitbandige Wechselspannungsanteile. Im Zeitbereich weist die Feldstärke typische Spikes auf.
Bei Überhub kommt es zu einer Flankendemodulation des Nutzsignals an den Zwischenfrequenzfiltern. Hierdurch ergeben sich in der Zwischenfrequenz AM-Anteile, die als Wechselspannungsanteile auf der Feldstärke auftreten.

Um ein Ansprechen auf diese niederfrequenten Singalreste zu verhindern, ist eine Filterung des Signals mit einem Hochpass erforderlich.
Bei niedrigen HF-Pegeln addiert sich auf die Feldstärke und das Multiplexsignal ein zusätzlicher breitbandiger Rauschanteil. Hierdurch wird eine Erkennung von Multipathstörungen weiter erschwert.

Das Verfahren zur Erkennung von Multipathstörungen arbeitet, wird anhand eines Beispieles, wie folgt, erläutert:
Als Signal zur Erkennung von Multipathstörungen wird im Folgenden beispielhaft das Feldstärkeanzeigesignal herangezogen. Es ist aber ebenfalls die Auswertung des Multiplexsignals, insbesondere des FM-Multiplexsignals, möglich.

Das Feldstärkeanzeigesignal, ungefiltert, dient als Eingangssignal für die Erkennung von Multipathstörungen. Um Einflüsse der niederfrequenten Signalanteile zu vermeiden, wird das Feldstärkeanzeigesignal einer Hochpassfilterung unterzogen. Zugleich wird das hochpassgefilterte Signal invertiert. Die Hochpassfilterung erfolgt, in einer weiteren Ausgestaltungsform der Erfindung, mittel eines aktiven Hochpasses.

Die gefilterte Feldstärkeanzeigesignal wird anschließend verstärkt. Als besonders vorteilhaft hat sich eine Verstärkung des Signals um mindestens den Faktor 12 ergeben. Diese Verstärkung erfolgt, damit die Pegel der hochfrequenten Signalanteile angehoben werden und eine genauere Analyse des so entstehenden Signals ermöglicht wird.

Anschließend wird dieses Signal auf die typischerweise vorhandene Impulse untersucht, welche durch Multipathstörungen auftreten. Werden derartige Impulse erkannt, so werden diese auf ihren Signalpegel untersucht.
Überschreitet der Signalpegel eines derartigen Impulses einen voreingestellten Pegel, so gilt dieser Impuls als relevant zur Verursachung einer hörbaren bzw. akustisch wahmehmbaren Multipathstörung. Der Impuls wird erfaßt und verbreitert. Als besonders vorteilhaft hat sich eine Verbreiterung um mindestens den Faktor 5 ergeben.
Dieses hierdurch entstehende Signal wird als Eingangssignal in mindestens eine Zeitkonstantenschaltung verwendet. Das über die Zeitkonstantenschaltung gewonnene Signal wird als Steuersignal für weiterer Funktionen zur Unterdrückung bzw. Reduzierung der durch Multipath entstehenden Störungen verwendet.
Das Steuersignal wird beispielsweise dazu verwendet um eine dynamische Höhenabsenkung (Highcut), Stereo-Mono-Überblendung (Stereoblend) und/oder Lautstärkebeeinflussung (Mute) zu steuern. Sobald eine Multipathstörung erkannt ist, wird eine dynamische Höhenabsenkung (Highcut), Stereo-Mono-Überblendung (Stereoblend) und/oder Lautstärkebeeinflussung (Mute) vorgenommen. Beispielsweise erfolgt die Reduzierung der Lautstärke linear, progressiv, proportional oder degressiv zum Steuersignal. Dies gilt auch für die dynamische Höhenabsenkung (Highcut), die Stereo-Mono-Überblendung (Stereoblend) und/oder die Lautstärkebeeinflussung (Mute) Außerdem wird beispielsweise die Empfindlichkeit der Störaustastung durch das Steuersignal, in oben genannter Weise, beeinflußt.

Eine weitere Möglichkeit der Beeinflussung durch das Steuersignal ist die Loudness-Schaltung und/oder die Sample- & Hold-Schaltung für die Pilot-PLL des Stereodecoders.

Im folgenden wird anhand eines Ausführungsbeispieles, die Schaltungsanordnung zur Durchführung des oben beschriebenen Verfahren erläutert. Das Ausführungsbeispiel hat nur beispielhaften Charakter und ist keine erschöpfende Aufzählung der erfindungsgemäßen Ausgestaltungsmöglichkeit.

Die Schaltungsanordnung setzt sich aus einem Hochpassfilter 1, einem Verstärker 2, einem Komparator 3, einem nachtriggerbaren Monofolp 4, einer Einstelleinheit 5, sowie den Zeitkonstantengliedern T1, T2 bis Tn zusammen.

Die Feldstärke dient als Eingangssignal U für die Schaltung. Der Feldstärke U sind die typischerweise vorhandenen Spikes überlagert. Der Hochpassfilter 1 unterdrückt die niederfrequenten Signalanteile sowie die Gleichanteile des Eingangssignal U und invertiert selbiges. Hierdurch werden die für die Multipath-Detektion störenden Signalanteile aus dem Eingangssignal U abgetrennt.
In einer vorteilhaften Ausgestaltung der Erfindung wird die Hochpassfiltereinheit 1 durch einen invertierenden aktiven Hochpass realisiert. Anschließend verstärkt die Verstärkereinheit 2 das gefilterte Eingangssignal U um die Signalpegel des gefilterten Eingangssignals U anzuheben.
Als besonders vorteilhaft hat sich erwiesen eine Verstärkung um mindestens den Faktor 10 vorzunehmen.

Das so verstärkte Signal, in welchem die Spikes vorhanden sind, wird der Komparatorschaltung 3 zugeführt. Die Triggerschwelle der Komparatorschaltung 3 ist einstellbar. Die Einstellung erfolgt über die Einstelleinheit 5.

Die Komparatorschaltung 3 steuert, bei Überschreitung der über die Einstelleinheit 5 eingestellten Triggerschwelle, das Monoflop 4 an. Das Monoflop 4 legt seinen Ausgang sofort auf einen definierten Ausgangswert und hält diesen Ausgangswert für eine vordefinierte Zeit.
Ist dem verstärkten Signal ein Spike überlagert und weist dieser Spike einen Pegel auf der größer ist als die Triggerschwelle der Komparatorschaltung 3, schaltet die Komparatorschaltung 3 auf das Monoflop 4 durch und steuert selbiges an. Das Monoflop 4 legt sofort seinen Ausgangspegel auf den vordefinierten Wert und hält den Pegel über die vordefinierte Zeit. Auf diese Weise wird der Spike erkannt und in einen Rechteckimpuls mit voreingestelltem Signalpegel und Dauer umgewandelt. Als besonders vorteilhaft hat es sich erwiesen einen Spike in einen Impuls umzuwandeln der in etwa die fünffache Dauer des Spikes aufweist. Auf diese Weise werden die zeitlich kurzen Spikes in Impulse definierter Länge gewandelt.

Das Monoflop 4 ist im weiteren derart ausgestaltet, daß es sich um ein nachtriggerbares Monoflop handelt. Hierdurch ist gewährleistet, daß das Monoflop 4 sofort nach Beendigung der Signalhaltedauer erneut ausgelöst werden kann, ohne die sonst übliche Regenerierungszeit abwarten zu müssen. Das durch das Monoflop 4 erzeugte Signal wird den Zeitkonstantenschaltungen T1, T2 bis Tn zugeführt. Die Zeitkonstantenschaltungen T1, T2 bis Tn sind mit den Steuerspannungen für die zu steuernden Funktionen verbunden. Über die Zeitkonstantenschaltungen T1, T2 bis Tn werden die Steuerspannungen U1, U2, bis UN erzeugt. Beispielsweise wird mittels der Zeitkonstantenschaltung T1 die Steuerspannung U1 erzeugt, welche die Höhenabsenkung steuert, mittels der Zeitkonstantenschaltung T2 die Steuerspannung U2 welche die Stereoüberlendung beeinflußt. Über die weiteren, aus den Zeitkonstantenschaltungen bis Tn gewonnenen, Steuerspannungen sind beispielsweise die Lautstärkereglung, die Regelung der Empfindlichkeit der Störaustastung, die Loudness-Schaltung oder die Sample- & Hold-Schaltung der Pilot-PLL des Stereodecoders beeinflußbar.

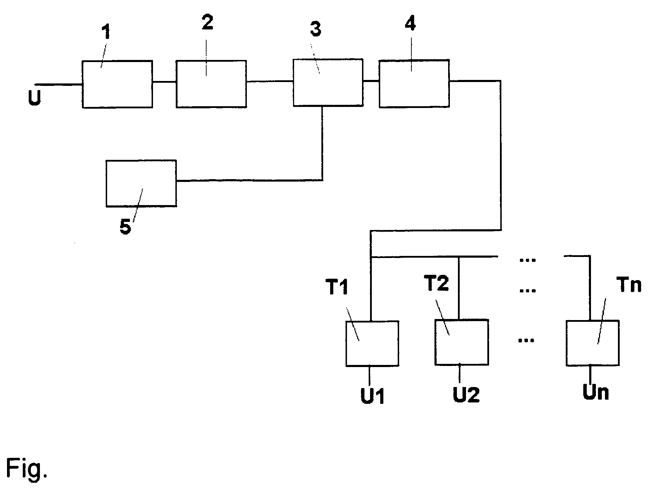

## Patentansprüche

1. Verfahren zur Erkennung und Reduzierung von Multipathstörungen in einem Rundfunksignal,
wobei
ein Eingangssignal, welches mit Multipathstörungen behaftet ist hochpassgefiltert wird, damit die niederfrequenten Signalanteile vom Eingangssignal unterdrückt werden,
das gefilterte Eingangssignal verstärkt wird, damit die hochfrequenten Signalanteile eine Pegelanhebung erfahren,
das gefilterte und verstärkte Eingangssignal auf typischerweise vorhandene Impulse, welche bei Multipathstörungen auftreten, durchsucht wird,
diese Impulse, wenn sie einen vorher festgelegten Pegel aufweisen oder überschreiten, erfaßt und verbreitert werden, wodurch die Signalenergie dieser Impulse vergrößert wird und
aus diesem Signal, über jeweils mindestens ein Zeitkonstantenglied, weitere Signale zur Beeinflussung der Verarbeitung des Rundfunksignals,
insbesondere der dynamische Höhenabsenkung (Highcut), der Stereo-Mono-Überblendung (Stereoblend) und/oder Lautstärkebeeinflussung (Mute) gewonnen werden.

2. Verfahren nach Anspruch 1,
**dadurch gekennzeichnet,**
daß das Rundfunksignal ein FM-Rundfunksignal ist.

3. Verfahren nach Anspruch 1 oder 2,
**dadurch gekennzeichnet**,
daß als Eingangssignal ein ungefilterte Feldstärkeanzeigesignal oder ein FM-Multiplexsignal verwendet wird.

4. Verfahren nach einem der Ansprüche 1 bis 3,
**dadurch gekennzeichnet,**
daß die Hochpassfilterung mittels eines aktiven Hochpasses durchgeführt wird und daß die Grenzfrequenz des Hochpasses 133 kHz beträgt.

5. Schaltungsanordnung zum Durchführen des Verfahrens nach einem der Ansprüche 1 bis 4, bestehend aus einer Hochpassfiltereinheit (1), einer Verstärkereinheit (2), einem Komparator (3), einem nachtriggerbaren Monofolp (4), einer Einstelleinheit (5), sowie den Zeitkonstantengliedern (T1), (T2) bis (Tn),
wobei
die Hochpassfiltereinheit (1) aus einem Eingangssignal (U) dessen Gleichanteil unterdrückt und niederfrequente Signalanteile bedämpft,
die Verstärkereinheit (2) das gefilterte Eingangssignal (U), insbesondere die hochfrequenten Signalanteile, verstärkt und an den Komparator (3) weiterleitet, dessen Triggerschwelle über die Einstelleinheit (5) einstellbar ist, sodaß beim Auftreten von Impulsen, welche bei Multipathstörungen typischerweise im Eingangssignal (U) auftreten, der Komparator (3) auf diese Impulse triggert, sobald diese Impulse eine über die Einstelleinheit (5) voreingestellte Triggerschwelle überschreiten,
der Komparator beim Triggern das nachtriggerbare Monoflop (4) schaltet, das nachtriggerbare Monoflop (4) die durch den Komparator (3) getriggerten Impulse auf eine vorab eingestellte Impulsbreite verbreitert, wodurch der Energieinhalt in den Impulsen erhöht wird und
die Zeitkonstenschaltungen (T1), (T2) bis (Tn) aus diesem Signal mindestens ein Steuersignal generieren.

6. Schaltungsanordnung nach Anspruch 5,
**dadurch gekennzeichnet,**
daß das Eingangssignal (U) das nicht bandbegrenten Feldstärkeanzeigesignal ist.

7. Schaltungsanordnung nach Anspruch 5,
**dadurch gekennzeichnet,**
daß das Eingangssignal (U) das Multiplexsignal ist.

8. Schaltungsanordnung nach einem der Ansprüche 5 bis 7,
**dadurch gekennzeichnet,**
daß die Zeitkonstantenschaltung (T1) aus dem Signal am Ausgang des nachtriggerbaren Monoflops (4) ein Signal (U1) zur Ansteuerung einer dynamischen Höhenabsenkung (Highcut),
die Zeitkonstantenschaltung (T2) ein Signal (U2) zur Ansteuerung der Stereo-Mono-Überblendung (Stereoblend), und
eine weitere Zeitkonstantenschaltung (Tn) ein Signal (Un) zur Lautstärkebeeinflussung (Mute) generiert.

9. Schaltungsanordnung nach einem der Ansprüche 5 bis 8,
**dadurch gekennzeichnet,**
daß die Hochpassfiltereinheit (1) ein invertierender aktiver Hochpass ist und eine Grenzfrequenz von 133 kHz aufweist.

10. Schaltungsanordnung nach einem der Ansprüche 5 bis 8,
**dadurch gekennzeichnet,**
daß die Verstärkereinheit (2) das gefilterte Eingangssignal (U) um mindestens den Faktor 10 verstärkt.

11. Schaltungsanordnung nach einem der Ansprüche 5 bis 8,
**dadurch gekennzeichnet,**
daß die Einstelleinheit (5) eine frei einstellbare Gleichspannungsquelle ist.

12. Schaltungsanordnung nach einem der Ansprüche 5 bis 8,
**dadurch gekennzeichnet,**
daß das nachtriggerbare Monoflop (4) die Impulsbreite der getriggerten Impulse auf eine Impulsbreite von 20 µs verbreitert.

13. Schaltungsanordnung nach einem der Ansprüche 5 bis 8,
**dadurch gekennzeichnet,**
daß die Zeitkonstantenschaltungen (T1), (T2) bis (Tn) durch T-Glieder realisiert sind und diese T-Glieder Widerstände aufweisen, deren Widerstand frei veränderlich ist.
